# EUROPEAN PATENT SPECIFICATION

(11) **EP 4 243 724 B1**
(45) Date of publication and mention of the grant of the patent: **08.01.2025**
(21) Application number: 21819205.2
(22) Date of filing: 08.11.2021
(51) Int. Cl.: A61C 8/00

(54) **A DENTAL IMPLANT IMPLANTABLE WITHOUT A PREVIOUS PERFORATION OF BONE**
ZAHNIMPLANTAT, DAS OHNE VORHERIGE PERFORATION DES KNOCHENS IMPLANTIERBAR IST
IMPLANT DENTAIRE IMPLANTABLE SANS PERFORATION PRÉALABLE DE L'OS

(30) Priority: 10.11.2020 IT 202000026786
(43) Date of publication of application: 20.09.2023
(73) Proprietor: Nodrill S.r.l., 65100 Pescara (PE) (IT)
(72) Inventor: TRISI, Paolo, 65123 Pescara (PE) (IT)
(74) Representative: Dall'Olio, Christian
(86) International application number: PCT/IB2021/060320
(87) International publication number: WO 2022/101760

(56) References cited:
- US-A1- 2003 165 796
- US-A1- 2015 086 942
- US-A1- 2015 297 321
- US-A1- 2016 166 358

## Description

### FIELD OF THE INVENTION

The present invention concerns the technical sector relating to implantology, i.e. the technique with which it is possible to restore, by application of a dental implant, a fixed dentition in those who, for various motives or reasons, have suffered the loss of one or more of their natural teeth.

In particular, the present invention concerns a dental implant which, owing to the particular conformation and structure thereof, can be directly implanted in the bone, for example in the maxilla bone or the mandibular bone, without making a prior perforation using piercing instruments, such as for example drills or burrs.

### DESCRIPTION OF THE PRIOR ART

Dental implants are used to replace natural teeth that have been lost in the upper or lower dental arc, i.e. in the maxilla bone or the mandibular bone.

Dental implants must be inserted and positioned in the bone in the position where a relative natural tooth has been lost in such a way that a relative end portion (termed the proximal or coronal portion) is positioned at the gum mucosa tissue to provide an anchoring point for a prosthetic element, i.e. for an artificial tooth.

The positioning of the dental implants is therefore a very delicate operation to carry out and it is necessary to enact the positioning thereof without causing significant damage or trauma to the bone, especially in all those cases in which the bone thickness is very reduced, while at the same time ensuring a stable and durable fixing.

A conventional technique for the positioning of dental implants includes performing a bone perforation in the site in which the implant is to be positioned, i.e. the performing of a hole in the bone by using a drill bit or a burr or another tool.

The hole to be made must therefore have a suitable shape to be able to receive the dental implant by form coupling or following a screwing-in.

The making of the hole requires carrying out various series of perforations, which can also include the use, in succession, of various drill bits having increasing diameters.

This leads to the loss of the bone tissue which is extracted by the drill bits used during the perforations.

Further, at each change of drill bit, the precise maintaining of a single and same perforation direction cannot be guaranteed, and is left to the ability of the operator.

The onset of these complications is extremely disadvantageous in all those cases in which the bone thickness is very reduced, thus also leading to the impossibility of inserting and stably positioning the dental implant.

Some dental implants are inserted by form coupling (press fit) in the hole realised using the drill or burr, with no rotations: these dental implants however do not guarantee a sealed coupling that is stable with the softer bone tissues, for example the upper maxilla bone.

Other dental implants, on the other hand, with the purpose of increasing the mechanical coupling with the walls of the hole, have a horizontal threading, or a cylindrical threading, which enables screwing thereof into the hole.

In this regard, special grooves must be made in the hole for receiving the threading of the dental implant during the screwing-in thereof into the hole, which are made using a special calibrated masking tool, which is added to all the perforation drill bits described in the foregoing.

However, the rotation of the threading in the grooves, in a case where the bone tissue is soft or thin, as can occur in some cases for the upper rear maxilla bone, can lead to the deformation of the grooves themselves, with a consequent instability of the coupling.

Further, once the dental implants have been inserted in the hole previously made in the bone, it is necessary to wait for a sufficient time to pass, usually of a few months, in order to enable the osteointegration of the dental implant, before proceeding to the positioning of the prosthetic element, i.e. of the artificial tooth.

The greater the instability of the implant following insertion, the longer the waiting time that will be necessary prior to application of the artificial tooth and the greater will be the risk that the implant will not succeed in obtaining a sufficient mechanical osteointegration for retaining the implant during chewing.

Document US2019/0021823 describes a dental implant (D) destined to be implanted into the bone without requiring a prior perforation of the bone for realising a hole.

The dental implant (D) described in this document is illustrated in figure 1.

It comprises a shank-shaped body (C) having a truncoconical shape and having, at a first distal end (C1) (or apical), a perforation element (P) in the shape of a smooth tip and, at a second proximal end (C2) (or coronal) thereof, a support portion having a hole for inserting and positioning a prosthetic element (not illustrated), i.e. an artificial tooth.

A helical threading (F) with a cutting profile is present about the shank-shaped body (C), starting from a position above the smooth tip and up to in proximity of the second proximal end (C2) (i.e. the support element of the artificial tooth).

Owing to the presence of the perforation element (P) having the smooth tip, the dental implant (D) can be positioned, with the perforation element (P), in the point of insertion of the implant, and therefore, with a percussion, can perforate the bone, causing the implant to be penetrated up to when the penetration element (P) has penetrated to a depth that is such that the threading (F) present in the body (C) of the implant reaches and engages the bone.

At this point, by rotating the dental implant (D) it is possible to perform the insertion thereof into the bone due to the presence of the threading (F) having the cutting profile which carries out a sort of self-tapping action on the bone; in practice the implant is directly screwed into the bone.

In this way, there is no removal of bone, which instead is the case when a prior perforation using a drill bit is carried out.

Using the spiral fashion helical threading (F), with the rotation of the implant, it is pushed into the bone and at the same time the helical threading (F) creates the grooves in the bone for the mechanical coupling, performing a self-tapping action.

Alternatively, a small hole having suitable dimensions to constitute a sort of lead-in for the positioning of the end of the smooth tip can be made.

The dental implant (D) is further made in such a way that, at a portion of the external surface of each turn (S) of a series of spiral turns (S) of the threading (F), a recess (V) or furrow is made which has an angular shape, i.e. which has a form such as to identify two surfaces (V1, V2), on a portion of each turn, which form an angle (A) between them.

In other words, in a portion of each turn (S) of the threading (F) there is a recess (V) which has a shape defined by two surfaces (V1, V2) arranged with an angle between them, i.e. which form an angle (A).

The succession of the various recesses between consecutive threads of the threading therefore forms a sort of groove or channel which extends axially along the dental implant and which has an angled bottom or a part of lateral wall that forms an angle with the other lateral wall.

It has the function of accommodating the fragments or residues of bone which can form during the screwing-in of the dental implant.

A dental implant of this type, while on the one hand removing the need for a prior perforation of the bone by means of special instruments for realising a hole that can house an implant, has however some drawbacks.

Firstly, it requires in any case the performing of a small hole in the bone, utilising the perforation element (smooth tip) in the apical end thereof, necessary for the positioning thereof, an operation that can therefore lead to the risk of damaging the bone, especially in all those cases in which the bone thickness is very reduced.

Secondly, the shape of the recesses on the portions of the turns of the helical threading, by forming angles, constitute a sort of rigid abutment, i.e. an abutment, for the bone residues which during the rotation of the implant, and thus during the steps of penetration of the implant into the bone, give rise to a resistance or friction force against the advancement in depth of the implant. Further, the shape of the recesses, with the two surfaces at an angle to one another, also constitute a sort of cutting profile which can lead to damage of the grooves that are being formed in the bone during the rotation, and therefore the screwing-in, of the implant, and thus compromise the mechanical stability thereof.

US2003165796A1 discloses a self-drilling implant for fixing dental prosthesis to jaw bone of patient, the implant has at least one flute which extends from cutting edge, to facilitate removal of bone cuttings from cutting edge.

US2015086942A1 relates to a dental implant fixture that has a vertical self-drilling function enabling vertical penetration, achieves high primary stability, and with other related components allows immediate loading.

### SUMMARY OF THE INVENTION

The invention is as defined in the appended claims.

The aim of the present invention is therefore to describe a new dental implant that is implantable without a prior perforation of the bone, able to obviate the drawbacks present in the prior-art dental implants described in the foregoing. In particular, an aim of the present invention is to provide a novel dental implant having a shape such as to be directly screwed and inserted into the bone in an effective and functional way, thus guaranteeing a stable mechanical coupling without risks of damage to the bone, including in those cases where the bone is soft and/or has a reduced thickness.

The above aims are attained according to the claims.

### BRIEF DESCRIPTION OF THE DRAWINGS

The features of preferred, but not exclusive, embodiments of the dental implant of the present invention will be described in the following with reference to the appended tables of drawings, in which:
- figure 1, already mentioned in the foregoing, schematically illustrates the dental implant of the prior art described in document US2019/0021823;
- figure 2A is a schematic perspective view a possible preferred embodiment of the dental implant of the invention;
- figure 2B illustrates, schematically and in a perspective view rotated by 90°, the dental implant of figure 2A;
- figure 3A illustrates the dental implant of figure 2A in a frontal view;
- figure 3B is the view along section plane I-I of figure 3A;

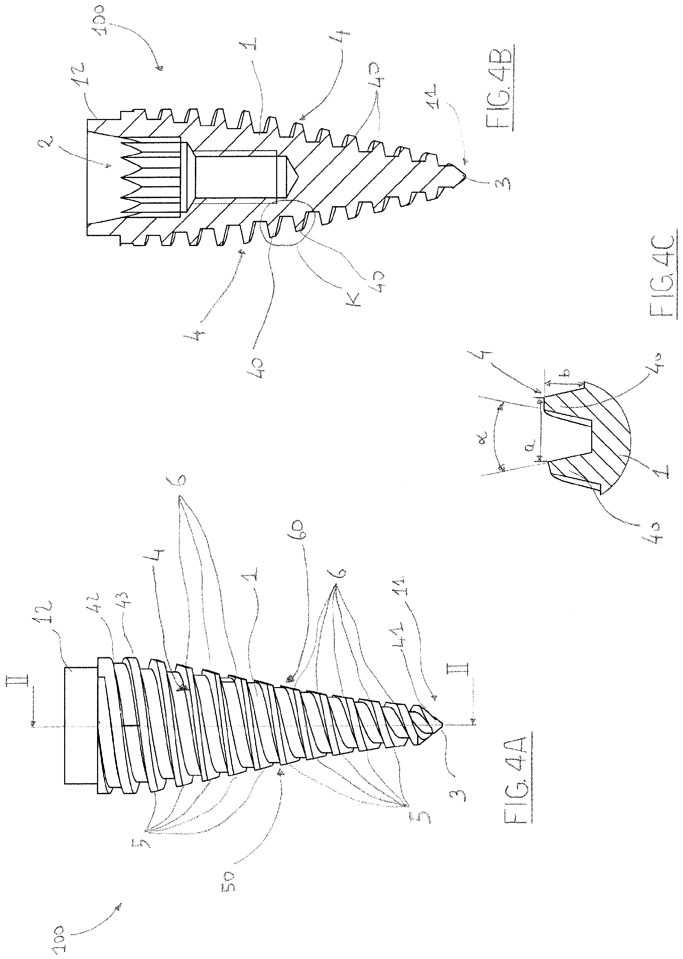

- figure 4A illustrates, according to a frontal view, the dental implant of figure 3A following a rotation by 90° about the relative vertical axis;
- figure 4B is the view along section plane II-II of figure 4A;
- figure 4C illustrates detail (K) of figure 4B in larger scale;

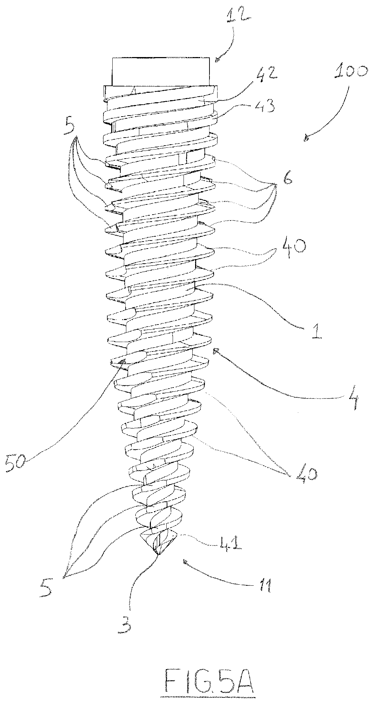

- figure 5A illustrates, in a frontal view, the dental implant of the present invention in a possible preferred embodiment;

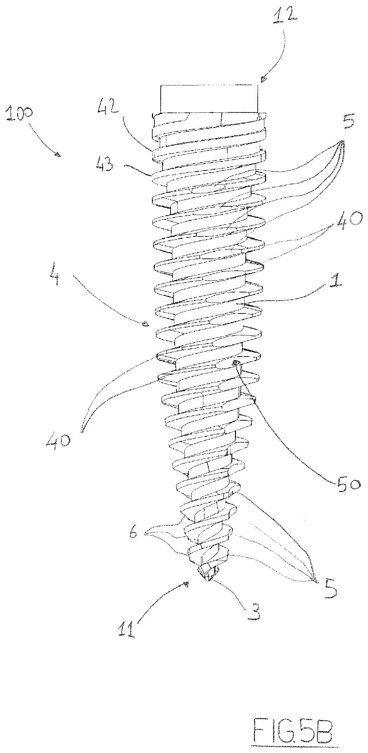

- figure 5B illustrates, again in a frontal view, the dental implant of figure 5A following a rotation by 90° about the relative vertical axis;

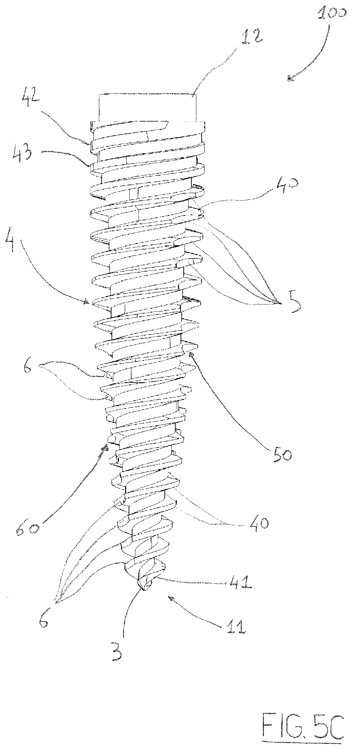

- figure 5C illustrates, again in a frontal view, the dental implant of figure 5A following a rotation by more than 90° and less than 180° about the relative vertical axis;

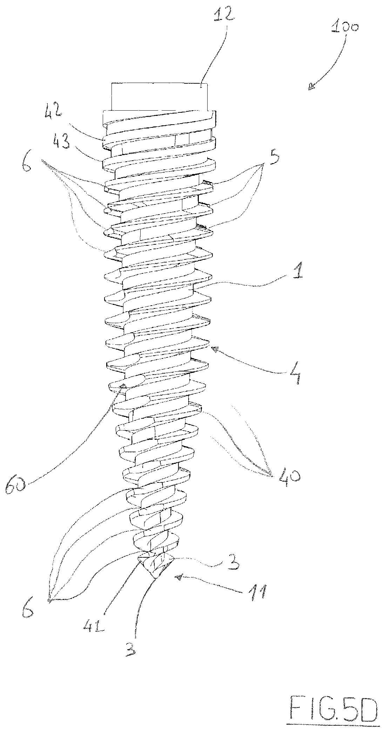

- figure 5D illustrates, again in a frontal view, the dental implant of figure 5A following a rotation by 180° about the relative vertical axis;
- figure 6A illustrates the dental implant of figure 5A in a schematic perspective view;
- figure 6B illustrates the dental implant of figure 5A in another perspective view taken from another angle;
- figure 7 is a plan view from below in a plan view from below of the dental implant of figure 5A;
- figure 8 is a view according to a section plane transversal and perpendicular to the vertical axis of the dental implant of figure 5A.

### DESCRIPTION OF THE PREFERRED EMBODIMENTS

With reference to the accompanying tables of drawings, reference numeral (100) denotes the dental implant implantable without a previous perforation of bone, object of the present invention, in its entirety.

The dental implant (100) is made in such a way as to comprise a shank-shaped body (1) having a truncoconical shape or possibly a conical shape and having a first distal, or apical, end (11), which is destined to be implanted in an internal position in the bone, and a second proximal, or coronal end (12), destined to be positioned at the gum tissue, once the dental implant has been implanted in the bone.

The dental implant (100) further comprises a housing (2), at the second proximal end (12), which is conformed for inserting and coupling a prosthetic element (not illustrated), such as for example an artificial tooth, and a tip (3), which is at the first distal end (11).

It is also provided with a helical threading (4) having a cutting profile which winds with a series of spiral turns (40) about the shank-shaped body (1), and a series of recesses (5, 6), each realised, respectively, at a portion of a respective turn (40) of a series of spiral turns (40) of the helical threading (4). The special characteristics of the dental implant (100) of the present invention consist in the fact that:
the helical threading (4) is realised starting directly from the end of the tip (3) in such a way that a first turn (41) of the helical threading (4) winds and
extends about the tip (3), preferably starting from the end thereof,
and in that each recess (5, 6) of the series of recesses (5, 6) is realised in such a way as to have an entirely concave surface without corners and/or edges so that the recesses (5, 6) of the series of recesses (5, 6) form a groove (50, 60) having a concave profile along the threading (4).

Owing to the fact of having the initial part of the threading (4) directly at the tip (3), with a first turn (41) of the helical threading (4) winding and extending about the tip (3) and starting from the end thereof, it is sufficient to position the tip (3) at the point on the bone tissue where it is intended to insert the dental implant and then set the dental implant in rotation so that it begins immediately to penetrate into the bone.

The rotation of the dental implant is such that the turns of the threading penetrate immediately into the bone, generating corresponding mechanical coupling grooves for gripping and holding on the bone.

In substance, the dental implant, owing to the presence of the threading already at the tip, performs both a self-drilling action and a self-tapping action, and it is not necessary to carry out any pressure or compression action thereon, but it is sufficient only to rotate it to enable the helical turns, by penetrating into the bone, to draw the implant into the bone, up to positioning it completely inserted into the bone with the relative second proximal (or coronal) end (12) positioned at the gum tissue.

The truncoconical shape, or possibly conical shape, of the body (1) enables expanding the hole that is forming during the inserting and screwing-in of the dental implant into the bone and, at the same time, compacting the surrounding bone and expanding the bone in a horizontal direction.

Possibly, for an optimal positioning of the tip of the dental implant at the point where it is to be implanted, and in order to define the inserting and screwing-in direction, a micro-hole can be performed which functions as a lead-in for the tip, or when the superficial part of the bone (known as cortical) is too hard and it is not possible to penetrate it.

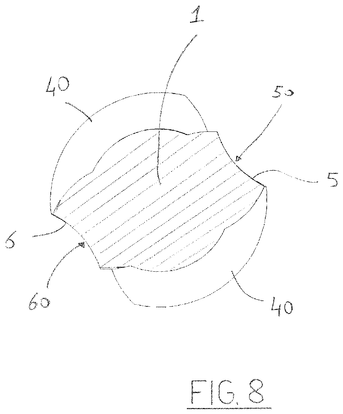

The fact that the recesses are realised in such a way as to have an entirely concave surface, i.e. without corners or edges (such as for example illustrated in figure 8), enables defining, along the threading, a sort of concave groove able to accommodate, internally thereof, the bone residues which form during the perforation and rotation of the implant, i.e. during the penetration of the cutting edges of the threading in the bone tissue.

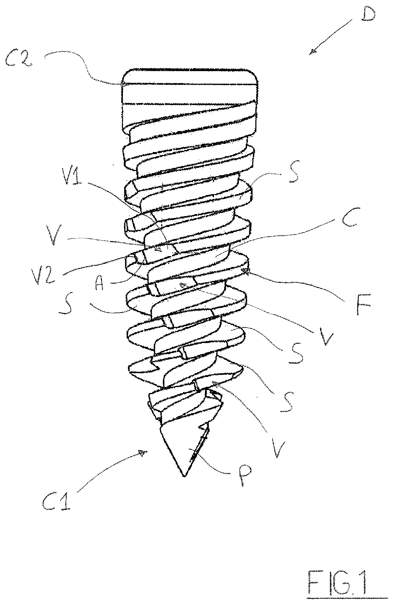

The creation, in the threads, of recesses having an entirely concave surface, with no corners or edges, further enables, in an entirely advantageous way, eliminating the onset of any friction or resistance forces present towards rotation of the implant, as there are no points constituting an abutment for the accumulation of bone residues, as occurs with the dental implant of the prior art described in document US2019/0021823 and illustrated in figure 1. Further, the concave profile of the recesses, and thus of the groove that the recesses form along the groove, does not have any cutting edge which might damage or compromise the shape of the grooves which are made in the bone by the turns of the threading during the rotation of the dental implant.

Further, having eliminated almost 50% of the turn by the creation of the recesses, the surface of the turn and therefore the friction thereof during the penetration-perforation is reduced, further facilitating the screwing-in.

Other advantageous characteristics of the dental implant of the invention are described in the following.

In a preferred aspect, the recesses (5, 6) of the series of recesses (5, 6) are realised in such a way as to comprise a first series of recesses (5) defining a first groove (50) along the threading (4) and a second series of recesses (6) defining a second groove (6) along the threading (4).

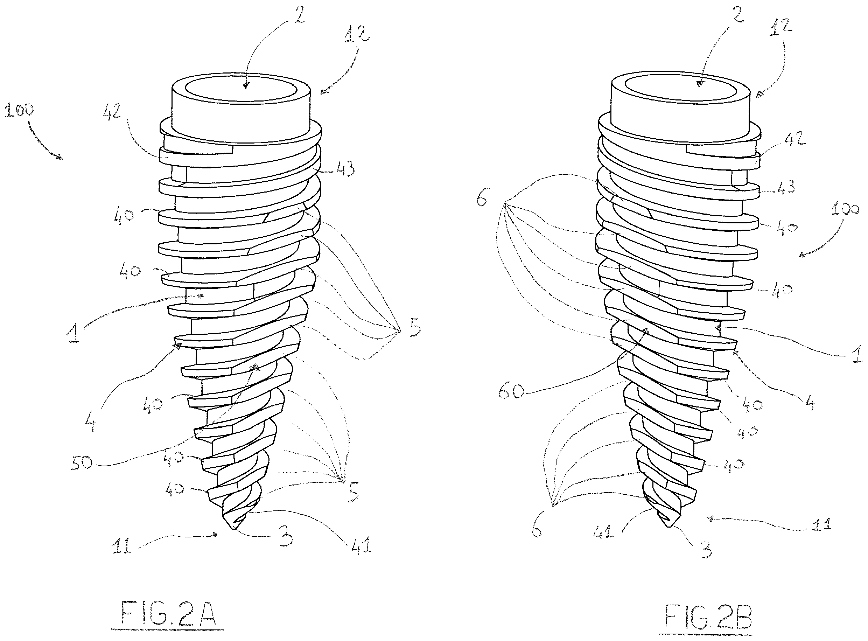

In particular, the first groove (50) and the second groove (60) extend, starting from the tip (3) towards the second proximal end (12), bilaterally along the threading (4) with respect to the vertical axis of the body (1) (see for example figures 2A and 2B which are views of the dental implant rotated by 90° to illustrate the two grooves).

In this preferred embodiment, the first series of recesses (5) and the second series of recesses (6) are realised in such a way as to form a first groove (50) and a second groove (60) which extend, starting from the tip (3) towards the second proximal end (12), bilaterally along the threading (4) with respect to the vertical axis of the body (1) and second respective straight pathways.

In another possible preferred embodiment, the first series of recesses (5) and the second series of recesses (6) can be realised in such a way as to form a first groove (50) and a second groove (60) which extend, starting from the tip (3) towards the second proximal end (12), bilaterally along the threading (4) with respect to the vertical axis of the body (1) according to respective spiral-shaped pathways.

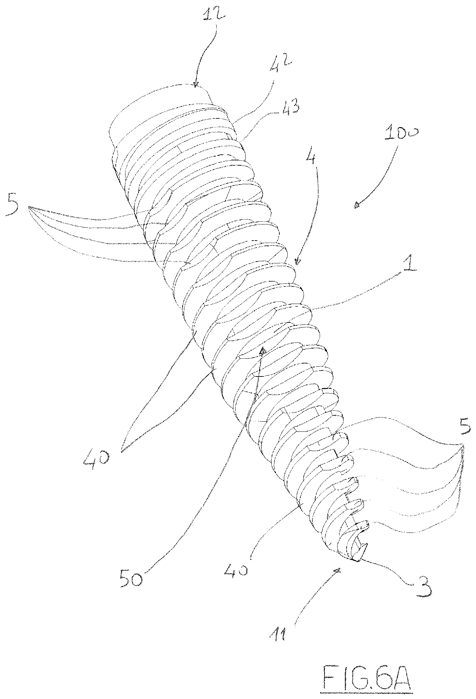

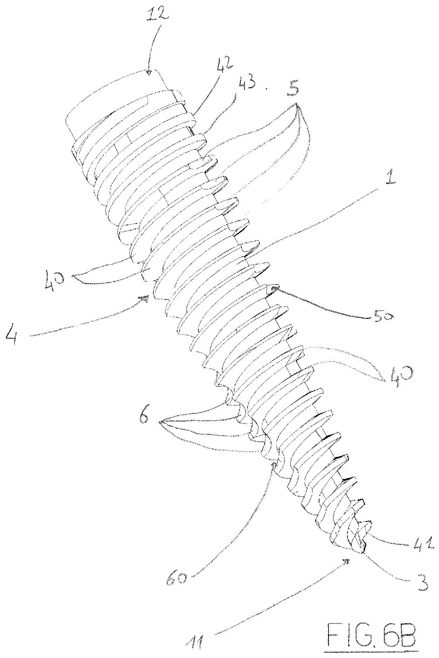

This preferred embodiment is illustrated in figures from 5A to 5D which show views of the dental implant rotated by different rotation angles in order to highlight the presence of the two grooves, as also in figures 6A and 6D.

The first series of recesses (5) and the second series of recesses (6) can preferably be realised in such a way as to form a first groove (50) and a second groove (60) which extend, starting from the tip (3) towards the second proximal end (12), bilaterally along the threading (4) with respect to the vertical axis of the body (1) according to respective spiral-shaped anticlockwise pathways.

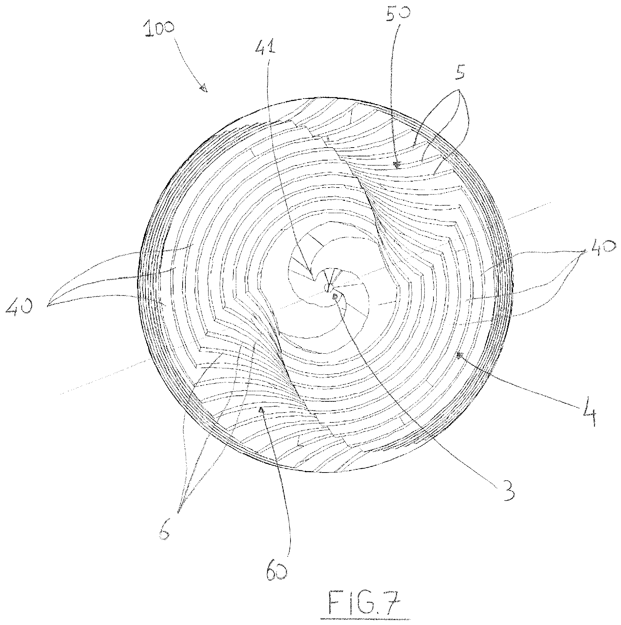

In this regard, see in particular figure 7, where the anticlockwise spiral-shaped extension of the two grooves formed by the two series of recesses realised in the turns of the threading is clearly visible.

This particular aspect, i.e. the spiral-shaped extension in the anticlockwise direction of the two grooves, as the dental implant is screwed into the bone by a rotation in the clockwise direction (right-turn), enables creating and defining volumes or empty spaces which follow the rotation of the turns of the threading and inside which, without being subjected to any friction force or resistance, the bone residues that form following the penetration of the cutting edges of the turns inside the bone can accumulate.

In a preferred further aspect, the recesses (5, 6) of the series of recesses (5, 6) are realised starting from a portion of a first turn (41) of the threading (4) at the tip (3), up to in proximity of the second proximal end (12) of the body (1), without affecting, and therefore leaving intact and whole, at least the last two turns (42, 43) of the threading (4).

This enables avoiding, once the dental implant has been completely screwed-in and inserted in the bone, with the relative second proximal (or coronal) end (12) positioned at the gum tissue, the presence of any passages or crevices in communication with the outside, since the two last turns (42, 43), which have remained whole, i.e. which have no recesses, constitute a sort of barrier.

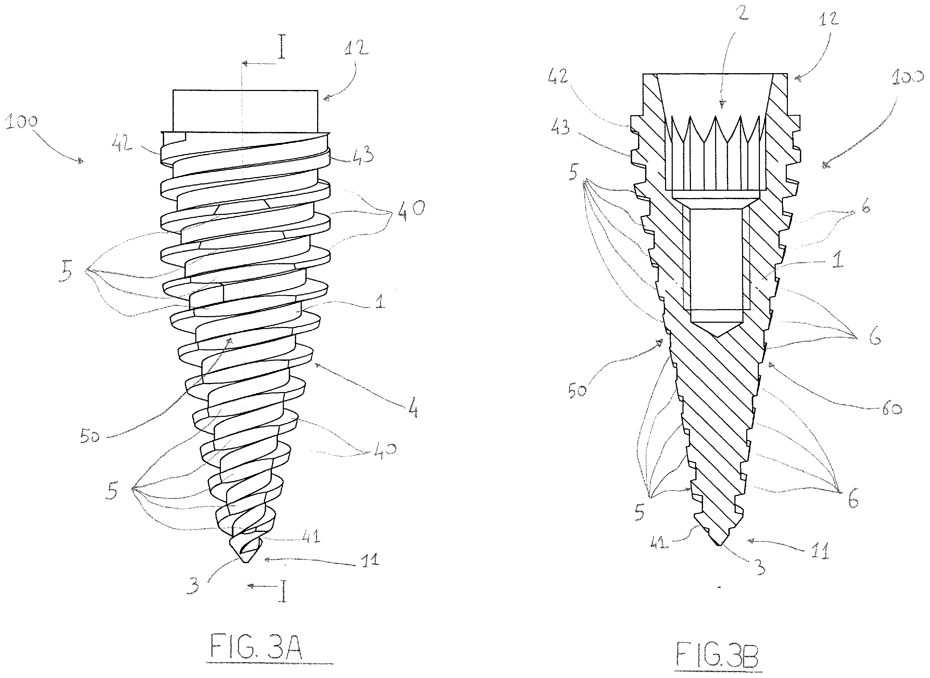

With the aim of further facilitating the penetration of the dental implant into the bone during the rotation thereof, of accumulating the bone residues and not creating an insurgence of any resistant force or friction, the recesses (5, 6) of the series of recesses (5, 6) can be realised in such a way as to have a growing depth, starting from a first turn (41) of the threading (4) at the tip (3) up to a turn of the threading (4) situated in a median position along the body (1) and so as to have, from the turn of the threading (4) situated in a median position along the body (1), a depth and a width that are decreasing towards the second proximal end (2) (this characteristic is for example visible in figure 3B).

In a further aspect, the recesses (5, 6) of the series of recesses (5, 6) can be realised in such a way as to have a depth and a growing width, starting from a first turn (41) of the threading (4) at the tip (3) up to a turn of the threading (4) situated in a median position along the body (1) and so as to have, from the turn of the threading (4) situated in a median position along the body (1), a depth and a width that are decreasing towards the second proximal end (12) (this aspect is for example visible in figure 2A or in figure 6A).

Still more advantageously, the recesses (5, 6) of the series of recesses (5, 6) can be realised in such a way as to have a depth and a width that grow, starting from a first turn (41) of the threading (4) at the tip (3) up to a turn of the threading (4) situated in a median position along the body (1) and so as to have, from the turn of the threading (4) situated in a median position along the body (1), a depth and a width that are decreasing towards the second proximal end (12).

The dental implant is preferably made of titanium which is the most biocompatible material for bone tissue, being able to integrate with the surrounding bone, thus facilitate osteointegration and over time maintain its bond with the bone.

The surface of the turns, as well as the surface of the shank-shaped body, in the parts thereof between the turns, can preferably be treated, wholly or in part, in such a way as to make them corrugated, so as to increase the capacity thereof to bond with the surrounding bone.

The shank-shaped body can have a truncoconical shape with two degrees of conicity.

The housing (2) in the second proximal end (12) can be conformed, not only to be able to receive a prosthetic element in a coupling, including for enabling the introduction therein of an instrument or tool utilisable for setting the dental implant in rotation and thus enable the inserting thereof by screwing-in the dental implant to the bone.

The second proximal end (12) can be realised in such a way as to have a cylindrical shape.

The threading (4) can be made in such a way as to have a pitch (a) of preferably 0.8 mm, with a variation comprised between 0.5 and 2 mm.

The pitch of the threading can be constant along the whole body of the implant, or can vary.

The threading can have one or more leads, for example two leads.

The depth (b) of the threads is variable, and is preferably 0.6 mm for the turns in proximity of the second proximal end (12), 0.8 mm in the median part of the body (1) and 0.3 mm in proximity of the first end (11), i.e. in proximity of the tip (3).

The depth of the turns can have a variation comprised between 0.1 and 1 mm. The angle (α) between the turns (40) of the threading (4) is of about 20 degrees, and can have a variation comprised between 10° and 30°.

The first turn (41) of the threading (4) is preferably located at 0.2 - 1 mm from the end of the tip (3).

The diameter of the first turn (41) is preferably 1 mm and can be comprised between 0.5 mm and 2 mm.

The diameter of the first distal end (11) in a tip shape (3) is preferably 0.6 mm, and can vary from 0.1 to 2 mm.

The particular shape of the shank-shaped body, as well as the threading with the presence of the series of recesses enables the dental implant to self-screw inside the bone and to expand the bone itself during the insertion, as the bone is shifted laterally by the wedge effect of the truncoconical shape, or conical shape, of the body.

The dental implant is self-drilling and self-tapping and enables the turns of the threading to make the grooves in the bone (i.e. to create the thread) during the rotation and inserting thereof into the bone.

Thus, in substance, the dental implant creates, at the same time, a piercing, a threading and a screwing.

This leads to a significant reduction in the inserting and positioning time of the implant.

The implant can also be inserted in very slim bone crests, and enables the expansion of the bone crest to be obtained during the positioning thereof.

As the dental implant is made of a biocompatible and osteo-integratable material, such as for example titanium, it can attain a high degree of bond with the surrounding bone and enables long-term functional load.

It can therefore function both as a crest expander and as a permanent support root of the dental prosthesis.

With its self-drilling and self-tapping properties, the dental implant enables maintaining the bone in the implant site without removing it.

In this way the quantity and density of the bone surrounding the implant can be increased once completely inserted, thus accelerating healing and increasing the stability of the implant, so as to reduce healing times and not to have to subject the patient to more surgical operations.

With the dental implant of the invention it is possible to obtain a compacting of the maxilla bone even in cases in which the bone density is poor or insufficient, and thus in any case obtain excellent implant stability once completely inserted.

As the dental implant of the invention can be inserted and screwed directly into the bone without the prior use of instruments for realising a hole, and therefore without removal of bone from the site in which the implant is to be implanted, it enables maintaining the whole bone present in the bone structure.

During the inserting-screwing-in of the dental implant of the invention, the bone is accumulated and strengthened by the rotation of the helical turns all about the surface of the body between the various threads and internally of the series of recesses (i.e. inside the grooves along the threading), thus determining an increase in the bone density precisely in the zone surrounding the implant.

This leads to an increase in implant stability, also measurable by measuring instruments of the pair of screwing force.

For this reason it is possible to reduce the times necessary for attaining bone healing and osteointegration, and therefore the waiting times for then positioning the prosthetic element (artificial tooth) in the housing of the second proximal end of the implant.

Another advantage of the present invention consists in sparing the patient the terrible experience of drilling into the maxilla bone using drill bits.

In fact, the maxilla bone is encased in the cranial bones and for this reason the patient undergoing drilling is subject to a sensation of drilling into the cranium itself.

## Claims

1. A dental implant (100) implantable without a previous perforation of bone, comprising:
a shank-shaped body (1) having a truncoconical shape or a conical shape and having a first distal, or apical, end (11), and a second proximal, or coronal, end (12);
a housing (2) for inserting and coupling a prosthetic element, at the second proximal end (12);
a tip (3), at the first distal end (11);
a helical threading (4) having a cutting profile which winds with a series of spiral turns (40) about the shank-shaped body (1);
a series of recesses (5, 6), each, respectively, at a portion of a respective turn (40) of a series of spiral turns (40) of the helical threading (4),
**characterised in that** the helical threading (4) is realised starting directly from the end of the tip (3) in such a way that a first turn (41) of the helical threading (4) winds and extends about the tip (3) and **in that** each recess (5, 6) of the series of recesses (5, 6) is realised in such a way as to have an entirely concave surface without corners and/or edges so that the recesses (5, 6) of the series of recesses (5, 6) form a groove (50, 60) having a concave profile along the threading (4).

2. The dental implant (100) of claim 1, wherein the recesses (5, 6) of the series of recesses (5, 6) are realised in such a way as to comprise a first series of recesses (5) defining a first groove (50) along the threading (4) and a second series of recesses (6) defining a second groove (6) along the threading (4), wherein the first groove (50) and the second groove (60) extend, starting from the tip (3) towards the second proximal end (12), bilaterally along the threading (4) with respect to the vertical axis of the body (1).

3. The dental implant (100) of claim 2, wherein the first groove (50) and the second groove (60) extend, starting from the tip (3) towards the second proximal end (12), bilaterally along the threading (4) with respect to the vertical axis of the body (1) and according to respective straight pathways.

4. The dental implant (100) of claim 2, wherein the first groove (50) and the second groove (60) extend, starting from the tip (3) towards the second proximal end (12), bilaterally along the threading (4) with respect to the vertical axis of the body (1) according to respective spiral-shaped pathways.

5. The dental implant (100) of claim 4, wherein the first groove (50) and the second groove (60) extend, starting from the tip (3) towards the second proximal end (12), bilaterally along the threading (4) with respect to the vertical axis of the body (1) according to spiral-shaped pathways in an anticlockwise direction.

6. The dental implant (100) of any one of the preceding claims, wherein the recesses (5, 6) of the series of recesses (5, 6) are realised starting from a portion of a first turn (41) of the threading (4) at the tip (3), up to in proximity of the second proximal end (12) of the body (1), without affecting, and therefore leaving intact and whole, at least the last two turns (42, 43) of the threading (4).

7. The dental implant (100) of any one of the preceding claims, wherein the recesses (5, 6) of the series of recesses (5, 6) are realised in such a way as to have a growing depth, starting from a first turn (41) of the threading (4) at the tip (3) up to a turn of the threading (4) situated in a median position along the body (1) and so as to have, from the turn of the threading (4) situated in a median position along the body (1), a decreasing depth towards the second proximal end (12).

8. The dental implant (100) of any one of the preceding claims, wherein the recesses (5, 6) of the series of recesses (5, 6) are realised in such a way as to have a growing width, starting from a first turn (41) of the threading (4) at a tip (3) up to a turn of the threading (4) situated in a median position along the body (1) and so as to have, from the turn of the threading (4) situated in a median position along the body (1), a decreasing width towards the second proximal end (12).

9. The dental implant (100) of any one of claims from 1 to 6, wherein the recesses (5, 6) of the series of recesses (5, 6) are realised in such a way as to have a depth and a width that grow, starting from a first turn (41) of the threading (4) at the tip (3) up to a turn of the threading (4) situated in a median position along the body (1) and so as to have, from the turn of the threading (4) situated in a median position along the body (1), a depth and a width that are decreasing towards the second proximal end (12).

## Patentansprüche

1. Ein dentales Implantat (100), implantierbar ohne eine vorherige Perforation des Knochens, umfassend:
einen schaftförmigen Körper (1) mit einer trunko-konischen oder konischen Form und einem ersten distalen oder apikalen Ende (11), und einem zweiten proximalen oder koronalen Ende (12);
eine Aufnahme (2) zum Einfügen und Koppeln eines prothetischen Elements, am zweiten proximalen Ende (12);
eine Spitze (3), am ersten distalen Ende (11);
ein spiralförmiges Gewinde (4) mit einem Schneidprofil, das sich mit einer Serie von Spiralumdrehungen (40) um den schaftförmigen Körper (1) windet;
eine Serie von Vertiefungen (5, 6), jeweils an einem Abschnitt einer jeweiligen Umdrehung (40) einer Serie von Spiralumdrehungen (40) des spiralförmigen Gewindes (4),
**dadurch gekennzeichnet, dass** das spiralförmige Gewinde (4) direkt von der Spitze (3) ausgeht, so dass sich eine erste Umdrehung (41) des spiralförmigen Gewindes (4) um die Spitze (3) windet und dass jede Vertiefung (5, 6) der Serie von Vertiefungen (5, 6) so ausgeführt ist, dass sie eine vollständig konkave Oberfläche ohne Ecken und/oder Kanten aufweist, so dass die Vertiefungen (5, 6) der Serie von Vertiefungen (5, 6) eine Nut (50, 60) mit einem konkaven Profil entlang des Gewindes (4) bilden.

2. Das dentale Implantat (100) nach Anspruch 1, wobei die Vertiefungen (5, 6) der Serie von Vertiefungen (5, 6) so ausgeführt sind, dass sie eine erste Serie von Vertiefungen (5) umfassen, die eine erste Nut (50) entlang des Gewindes (4) definieren, und eine zweite Serie von Vertiefungen (6), die eine zweite Nut (60) entlang des Gewindes (4) definieren, wobei die erste Nut (50) und die zweite Nut (60) von der Spitze (3) in Richtung des zweiten proximalen Endes (12) beidseitig entlang des Gewindes (4) in Bezug auf die vertikale Achse des Körpers (1) verlaufen.

3. Das dentale Implantat (100) nach Anspruch 2, wobei die erste Nut (50) und die zweite Nut (60) von der Spitze (3) in Richtung des zweiten proximalen Endes (12) beidseitig entlang des Gewindes (4) in Bezug auf die vertikale Achse des Körpers (1) entsprechend jeweiligen geraden Bahnen verlaufen.

4. Das dentale Implantat (100) nach Anspruch 2, wobei die erste Nut (50) und die zweite Nut (60) von der Spitze (3) in Richtung des zweiten proximalen Endes (12) beidseitig entlang des Gewindes (4) in Bezug auf die vertikale Achse des Körpers (1) entsprechend jeweiligen spiralförmigen Bahnen verlaufen.

5. Das dentale Implantat (100) nach Anspruch 4, wobei die erste Nut (50) und die zweite Nut (60) von der Spitze (3) in Richtung des zweiten proximalen Endes (12) beidseitig entlang des Gewindes (4) in Bezug auf die vertikale Achse des Körpers (1) in spiralförmigen Bahnen in einer gegen den Uhrzeigersinn verlaufenden Richtung verlaufen.

6. Das dentale Implantat (100) nach einem der vorhergehenden Ansprüche, wobei die Vertiefungen (5, 6) der Serie von Vertiefungen (5, 6) von einem Abschnitt einer ersten Umdrehung (41) des Gewindes (4) an der Spitze (3) bis in die Nähe des zweiten proximalen Endes (12) des Körpers (1) ausgeführt sind, ohne dabei zumindest die letzten beiden Umdrehungen (42, 43) des Gewindes (4) zu beeinträchtigen, und daher unberührt und ganz bleiben.

7. Das dentale Implantat (100) nach einem der vorhergehenden Ansprüche, wobei die Vertiefungen (5, 6) der Serie von Vertiefungen (5, 6) so ausgeführt sind, dass sie eine zunehmende Tiefe aufweisen, beginnend von einer ersten Umdrehung (41) des Gewindes (4) an der Spitze (3) bis zu einer in mittlerer Position entlang des Körpers (1) befindlichen Umdrehung des Gewindes (4), und so ausgeführt sind, dass sie von der in mittlerer Position entlang des Körpers (1) befindlichen Umdrehung des Gewindes (4) eine abnehmende Tiefe in Richtung des zweiten proximalen Endes (12) aufweisen.

8. Das dentale Implantat (100) nach einem der vorhergehenden Ansprüche, wobei die Vertiefungen (5, 6) der Serie von Vertiefungen (5, 6) so ausgeführt sind, dass sie eine zunehmende Breite aufweisen, beginnend von einer ersten Umdrehung (41) des Gewindes (4) an der Spitze (3) bis zu einer in mittlerer Position entlang des Körpers (1) befindlichen Umdrehung des Gewindes (4), und so ausgeführt sind, dass sie von der in mittlerer Position entlang des Körpers (1) befindlichen Umdrehung des Gewindes (4) eine abnehmende Breite in Richtung des zweiten proximalen Endes (12) aufweisen.

9. Das dentale Implantat (100) nach einem der Ansprüche 1 bis 6, wobei die Vertiefungen (5, 6) der Serie von Vertiefungen (5, 6) so ausgeführt sind, dass sie eine Tiefe und eine Breite aufweisen, die zunehmen, beginnend von einer ersten Umdrehung (41) des Gewindes (4) an der Spitze (3) bis zu einer in mittlerer Position entlang des Körpers (1) befindlichen Umdrehung des Gewindes (4), und so ausgeführt sind, dass sie von der in mittlerer Position entlang des Körpers (1) befindlichen Umdrehung des Gewindes (4) eine abnehmende Tiefe und Breite in Richtung des zweiten proximalen Endes (12) aufweisen.

## Revendications

1. Un implant dentaire (100) implantable sans une perforation préalable de l'os, comprenant:
un corps en forme de tige (1) ayant une forme tronconique ou conique et ayant une première extrémité distale, ou apicale (11), et une seconde extrémité proximale, ou coronaire (12);
un logement (2) pour insérer et coupler un élément prothétique, à la seconde extrémité proximale (12);
une pointe (3), à la première extrémité distale (11);
un filetage hélicoïdal (4) ayant un profil de coupe qui s'enroule avec une série de tours spiraux (40) autour du corps en forme de tige (1);
une série de creux (5, 6), chacun, respectivement, à une portion d'un tour respectif (40) d'une série de tours spiraux (40) du filetage hélicoïdal (4),
**caractérisé en ce que** le filetage hélicoïdal (4) est réalisé directement à partir de l'extrémité de la pointe (3) de telle sorte qu'un premier tour (41) du filetage hélicoïdal (4) s'enroule et s'étend autour de la pointe (3) et **en ce que** chaque creux (5, 6) de la série de creux (5, 6) est réalisé de manière à avoir une surface entièrement concave sans coins et/ou arêtes, de sorte que les creux (5, 6) de la série de creux (5, 6) forment une rainure (50, 60) ayant un profil concave le long du filetage (4).

2. L'implant dentaire (100) selon la revendication 1, dans lequel les creux (5, 6) de la série de creux (5, 6) sont réalisés de telle manière qu'ils comprennent une première série de creux (5) définissant une première rainure (50) le long du filetage (4) et une seconde série de creux (6) définissant une seconde rainure (60) le long du filetage (4), la première rainure (50) et la seconde rainure (60) s'étendant, à partir de la pointe (3) vers la seconde extrémité proximale (12), de manière bilatérale le long du filetage (4) par rapport à l'axe vertical du corps (1).

3. L'implant dentaire (100) selon la revendication 2, dans lequel la première rainure (50) et la seconde rainure (60) s'étendent, à partir de la pointe (3) vers la seconde extrémité proximale (12), de manière bilatérale le long du filetage (4) par rapport à l'axe vertical du corps (1) selon des trajectoires respectives rectilignes.

4. L'implant dentaire (100) selon la revendication 2, dans lequel la première rainure (50) et la seconde rainure (60) s'étendent, à partir de la pointe (3) vers la seconde extrémité proximale (12), de manière bilatérale le long du filetage (4) par rapport à l'axe vertical du corps (1) selon des trajectoires respectives en spirale.

5. L'implant dentaire (100) selon la revendication 4, dans lequel la première rainure (50) et la seconde rainure (60) s'étendent, à partir de la pointe (3) vers la seconde extrémité proximale (12), de manière bilatérale le long du filetage (4) par rapport à l'axe vertical du corps (1) selon des trajectoires en spirale dans une direction antihoraire.

6. L'implant dentaire (100) selon l'une quelconque des revendications précédentes, dans lequel les creux (5, 6) de la série de creux (5, 6) sont réalisés à partir d'une portion d'un premier tour (41) du filetage (4) à la pointe (3), jusqu'à proximité de la seconde extrémité proximale (12) du corps (1), sans affecter et donc en laissant intacts et entiers au moins les deux derniers tours (42, 43) du filetage (4).

7. L'implant dentaire (100) selon l'une quelconque des revendications précédentes, dans lequel les creux (5, 6) de la série de creux (5, 6) sont réalisés de telle sorte qu'ils présentent une profondeur croissante, à partir d'un premier tour (41) du filetage (4) à la pointe (3) jusqu'à un tour du filetage (4) situé en position médiane le long du corps (1), et de telle sorte qu'ils présentent, à partir du tour du filetage (4) situé en position médiane le long du corps (1), une profondeur décroissante vers la seconde extrémité proximale (12).

8. L'implant dentaire (100) selon l'une quelconque des revendications précédentes, dans lequel les creux (5, 6) de la série de creux (5, 6) sont réalisés de telle sorte qu'ils présentent une largeur croissante, à partir d'un premier tour (41) du filetage (4) à la pointe (3) jusqu'à un tour du filetage (4) situé en position médiane le long du corps (1), et de telle sorte qu'ils présentent, à partir du tour du filetage (4) situé en position médiane le long du corps (1), une largeur décroissante vers la seconde extrémité proximale (12).

9. L'implant dentaire (100) selon l'une quelconque des revendications de 1 à 6, dans lequel les creux (5, 6) de la série de creux (5, 6) sont réalisés de telle sorte qu'ils présentent une profondeur et une largeur croissantes, à partir d'un premier tour (41) du filetage (4) à la pointe (3) jusqu'à un tour du filetage (4) situé en position médiane le long du corps (1), et de telle sorte qu'ils présentent, à partir du tour du filetage (4) situé en position médiane le long du corps (1), une profondeur et une largeur décroissantes vers la seconde extrémité proximale (12).
